# EUROPÄISCHE PATENTSCHRIFT

(11) **EP 1 995 936 B1**
(45) Veröffentlichungstag und Bekanntmachung des Hinweises auf die Patenterteilung: **04.01.2017**
(21) Anmeldenummer: 07405147.5
(22) Anmeldetag: 22.05.2007
(51) Int. Cl.: H04L 29/08

(54) **System und Verfahren zum Anfordern und Wiedergeben von Audioinhalten**
System and method for requesting and playing audio content
Système et procédé destinés à la demande et au rendu de contenus audio

(43) Veröffentlichungstag der Anmeldung: 26.11.2008
(73) Patentinhaber: Swisscom AG, 3050 Bern (CH)
(72) Erfinder: Kummernuss, Thomas, Niederscherli, 3145 (CH)
(74) Vertreter: Rentsch Partner AG

(56) Entgegenhaltungen:
- WO-A-03/052610
- DE-A1- 10 306 049
- US-A1- 2003 037 157
- US-A1- 2003 163 486
- US-A1- 2005 044 254

## Beschreibung

### Technisches Gebiet

Die vorliegende Erfindung betrifft ein System und ein Verfahren zum Anfordern und Wiedergeben von Multimediainhalten. Die vorliegende Erfindung betrifft insbesondere ein System und ein Verfahren zum Anfordern von digitalen Audioinhalten mittels Kommunikationsendgeräten über ein Telekommunikationsnetz und zum Wiedergeben der Audioinhalte durch Wiedergabeeinheiten, die von den Kommunikationsendgeräten getrennt sind.

### Stand der Technik

Das Anfordern und Herunterladen von Audioinhalten mittels Kommunikationsendgeräten über Telekommunikationsnetze wurde insbesondere mit der Verbreitung breitbandiger und schnellerer Verbindungen zum Internet sowie mit der effizienteren Kompression der Audiodateien, z.B. mittels MP3 (Moving Picture Expert Group - Audio Layer 3), immer einfacher und populärer. Die Audiodateien werden mittels fest installierter oder mobiler Kommunikationsendgeräte, z.B. Personal Computer respektive Mobilfunktelefone, herunter geladen und häufig zur späteren Wiedergabe in mobilen Wiedergabegeräten gespeichert, z.B. MP3 Spielgeräte. Wenigstens teilweise durch die leichte und mobile Verfügbarkeit bedingt gerieten traditionelle Geräte zum Anfordern und Wiedergeben von Audioinhalten in öffentlichen Lokalen, z.B. Jukeboxes in Restaurants und Bars, immer mehr in die Vergessenheit. Typischerweise haben die mobilen Wiedergabegeräte aber keine akustische Wiedergabequalität, die sich mit derjenigen einer traditionellen Jukebox messen kann.

In der Patentanmeldung US 2003/0163486 wird eine virtuelle Jukebox beschrieben, welche Musikwünsche von beispielsweise portablen Steuergeräten über ein Kommunikationsnetz entgegennimmt.

In der Patentanmeldung US 2003/0037157 wird ein computergestütztes Jukebox-System beschrieben, welches ermöglicht Musikwünsche über ein Kommunikationsnetz, z.B. ein LAN (Local Area Network), VPN (Virtual Private Network) oder das Internet, von verschiedenen Anfragegeräten wie PC, Notebook, oder PDAs (Personal Digital Assistant) entgegenzunehmen. Das Jukebox-System kann an mehrere Lautsprechersysteme angeschlossen sein, die beispielsweise in einem Gebäude verteilt sind.

In der Patentanmeldung US 2005/0044254 wird ein Jukebox-System beschrieben, in welchem Benutzer Ihre Musikanfragen per Mobilfunktelefon über ein Mobilfunknetz an die Jukebox übermitteln, z.B. per SMS (Short Messaging Services). Angefragte Musikdateien können von der Jukebox von einer Zentrale herunter geladen werden. Mittels eines Positionsbestimmungssystems, z.B. GPS (Global Positioning System) wird die Position eines Benutzers bestimmt und dem Benutzer werden Bars mit verfügbaren Jukeboxes angezeigt. Die Audiodateien sind beispielsweise entfernt von der Wiedergabeeinheit der Jukebox angeordnet.

Bei diesen bekannten Jukebox-Systemen wird die Bestellanfrage eines Benutzers für eine Audiodatei stets an das Jukebox-System übertragen, das auch die Wiedergabe des Audioinhalts ausführt. Das erfordert jedoch, dass der Benutzer jeweils über Adress- und/oder Kontaktinformationen verfügt, um bei einem lokalen oder entfernten Jukebox-System die Wiedergabe eines Audioinhalts anzufordern. Überdies müssen die lokalen Jukebox-Systeme jeweils mit Empfangs- und Steuermodulen versehen sein, um solche Bestellanfragen von den anfragenden Kommunikationsendgeräten zu empfangen, entgegenzunehmen und zu verarbeiten, d.h. den betreffenden Audioinhalt zu identifizieren, zu beziehen und wiederzugeben.

In der Patentanmeldung DE 103 06 049 wird ein Telekommunikationssystem zur Steuerung der Anzeige von Videosequenzen beschrieben, in welchem mittels einer Mobilfunkeinheit eine SMS Nachricht (Short Messaging Services) mit einer Nutzerkennung an einen Server übermittelt wird, wobei die Nutzerkennung einem Wiedergabegerät, zum Beispiel einem Fernsehgerät in einem Hotelzimmer zugeordnet ist. Die SMS wird dem Wiedergabegerät zugeordnet und ein Pay-TV-Kanal wird für das betreffende Wiedergabegerät freigeschaltet. Die Videosequenzen können zudem von einem Server auf den freigeschalteten Pay-TV-Kanal ins Fernsehkabelnetz eingespeist werden, wobei die Anbieter der Pay-TV-Inhalte die Videosequenzen über das Internet on-line auf dem Server aktualisieren können.

In der Patentanmeldung WO 03/052610 wird ein System für die Auslieferung von Dateninhalten über ein Kommunikationsnetzwerk beschrieben, in welchem Dateninhalte beispielsweise mittels eines mobilen Kommunikationsendgeräts von einem Inhaltsserver bestellt werden. Die angeforderten Dateninhalte werden gemäss WO 03/052610 zu einem vom Bestellzeitpunkt unterschiedlichen Zeitpunkt an ein vom Bestellgerät verschiedenes, in der Bestellung spezifiziertes Auslieferungsgerät übermittelt und dort gespeichert, so dass der Benutzer beim Auslieferungsgerät auf die gespeicherten Dateninhalte zugreifen kann.

### Darstellung der Erfindung

Es ist eine Aufgabe der vorliegenden Erfindung ein System und ein Verfahren zum Anfordern und Wiedergeben von Multimediainhalten vorzuschlagen, welche nicht die Nachteile des Stands der Technik aufweisen. Es ist insbesondere eine Aufgabe der vorliegenden Erfindung ein System und ein Verfahren zum Anfordern und Wiedergeben von Audioinhalten vorzuschlagen, bei welchen lokale Jukebox-Vorrichtungen, die für die Wiedergabe von Audioinhalten vorgesehen sind, nicht für den Empfang und die Verarbeitung von Bestellanfragen für Audioinhalte eingerichtet sein müssen. Es ist insbesondere eine weitere Aufgabe der vorliegenden Erfindung ein System und ein Verfahren zum Anfordern und Wiedergeben von Audioinhalten vorzuschlagen, bei welchen Bestellanfragen für Audioinhalte durch Kommunikationsendgeräte übermittelt werden können, beispielsweise ohne dass von den einzelnen lokalen Jukebox-Vorrichtungen jeweils Adress- und/oder Kontaktinformationen bekannt sein müssen.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Die oben genannten Ziele werden durch die vorliegende Erfindung insbesondere dadurch erreicht, dass die Bestellanfragen für Multimediainhalte, insbesondere für Audioinhalte, mittels Kommunikationsendgeräten über ein Telekommunikationsnetz an eine computerbasierte Zentraleinheit übermittelt werden, und dass die Multimediainhalte, insbesondere die Audioinhalte, von der computerbasierten Zentraleinheit über ein Telekommunikationsnetz jeweils entsprechend einer Bestellanfrage an eine von mehreren geografisch verteilten, von der Zentraleinheit entfernten und von den Kommunikationsendgeräten getrennten Wiedergabeeinheiten zum Wiedergeben der Multimediainhalte, insbesondere der Audioinhalte, übermittelt werden. Neben den Audioinhalten umfassen die Multimediainhalte je nach Ausführung weitere codierte digitale Inhalte, welche von Wiedergabeeinheiten zur Stimulation menschlicher Sinnesorgane wieder gegebenen werden können, beispielsweise Videoinformationen, Bildinformationen, etc. Die Bestellanfragen für Multimediainhalte/Audioinhalte werden also von Benutzern mittels der Kommunikationsendgeräte, z.B. mobile Kommunikationsendgeräte, über ein Telekommunikationsnetz, z.B. ein Mobilfunknetz, an ein Empfangsmodul übermittelt, das in der Zentraleinheit angeordnet ist, welche von den Wiedergabeeinheiten entfernt angeordnet ist. Vorzugsweise übermittelt die Zentraleinheit die angeforderten Multimediainhalte/Audioinhalte als kontinuierlicher Datenstrom an die betreffende Wiedergabeeinheit. Dadurch dass mehrere Wiedergabeeinheiten von Benutzern mittels Ihrer Kommunikationsendgeräte über eine gemeinsame Zentraleinheit ansteuerbar sind, müssen nicht mehrere verschiedene Adress- und/oder Kontaktinformationen von Wiedergabeeinheiten bekannt sein. Zudem können die Wiedergabeeinheiten gegenüber dem Stand der Technik einfacher ausgestaltet werden, da sie kein Empfangsmodul für den Empfang und die Verarbeitung von Bestellanfragen für Audioinhalte aufweisen müssen und da sie überdies nicht mit einem Speichermodul für die lokale Speicherung von Audiodateien mit Audioinhalten versehen werden müssen.

Vorzugsweise wird mit den Bestellanfragen jeweils eine Angabe zur Bestimmung einer der Wiedergabeeinheiten an die Zentraleinheit übermittelt. Auf Grund dieser Angabe bestimmt die Zentraleinheit eine selektierte Wiedergabeeinheit, und die Zentraleinheit stellt den betreffenden Multimediainhalt/Audioinhalt zur Übermittlung an die selektierte Wiedergabeeinheit bereit. Die Übermittlung erfolgt im Push oder Pull Modus von der Zentraleinheit an die Wiedergabeeinheit. Im Pull Modus erstellt die Wiedergabeeinheit beispielsweise einen Kommunikationskanal, z.B. ein Streamingkanal, über welchen die bereitgestellten Multimediainhalte von der Zentraleinheit an die Wiedergabeeinheit übermittelt werden. Im Push Modus werden die bereitgestellten Multimediainhalte auf Initiative der Zentraleinheit an die bestimmte Wiedergabeeinheit übermittelt. Die Angabe zur Bestimmung der Wiedergabeeinheit umfasst eine Kennung der Wiedergabeeinheit und/oder eine Ortsangabe. Die Kennung der Wiedergabeeinheit umfasst beispielsweise einen Namen oder eine Identifizierungsnummer der Wiedergabeeinheit. Die Ortsangabe umfasst beispielsweise eine Ortsangabe, die angibt, wo die Wiedergabeeinheit lokalisiert ist, z.B. ein Name einer Örtlichkeit wie Bar, Restaurant oder Club, oder eine Ortsangabe, die angibt, wo das anfordernde Kommunikationsendgerät positioniert ist, z.B. GPS Koordinaten oder Identifizierungen einer Netzwerkzelle oder Basisstation. Durch die Übermittlung von Angaben zur Bestimmung der Wiedergabeeinheit werden somit unterschiedliche Möglichkeiten für die Selektion der anzusteuernden Wiedergabeeinheit unterstützt. Die Wiedergabeeinheit kann automatisch auf Grund der aktuellen geografischen Position des Benutzers respektive seines Kommunikationsendgeräts selektiert werden, beispielsweise entsprechend der Position des Benutzers bei der Eingabe und Übermittlung der Bestellanfrage, oder entsprechend der aktuellen Position des Benutzers bei der geplanten Wiedergabe des angeforderten Audioinhalts, falls sich der Benutzer in der Zwischenzeit in ein anderes Lokal mit einer Wiedergabeeinheit bewegt hat. Die Wiedergabeeinheit kann aber auch auf Grund einer vom Benutzer eingegebenen, eingelesenen oder gesprochenen Kennung selektiert werden, so dass ein gewünschter Audioinhalt in einer Lokalität unabhängig davon wiedergegeben wird, ob sich der Benutzer in der Lokalität befindet oder nicht.

In einer Ausführungsvariante führt die Zentraleinheit eine empfangene Bestellanfrage für einen Audioinhalt in eine Warteschlange ein und bestimmt eine geplante Zeit für die Wiedergabe des betreffenden Audioinhalts. Die geplante Zeit wird zur Information des betreffenden Benutzers von der Zentraleinheit an das anfordernde Kommunikationsendgerät übermittelt. Diese Ausführungsvariante ist vor allem dann von Vorteil, wenn sich mehrere Anfragen für die Wiedergabe von verschiedenen Audioinhalten stauen und sequentiell abgearbeitet werden müssen.

In einer weiteren Ausführungsvariante sind mindestens gewisse der Audioinhalte mit Videoinhalten kombiniert, und die Zentraleinheit übermittelt die kombinierten Audio-/Videoinhalte zur hörbaren und sichtbaren Wiedergabe an die betreffende Wiedergabeeinheit. Die kombinierten Audio-/Videoinhalte werden von der Zentraleinheit vorzugsweise als kontinuierlicher Datenstrom an die betreffende Wiedergabeeinheit übermittelt.

Neben dem System und dem Verfahren zum Anfordern und Wiedergeben von Multimediainhalten/Audioinhalten bezieht sich die vorliegende Erfindung zudem auf ein Computerprogrammprodukt mit Computerprogrammcodemitteln zur Steuerung eines oder mehrerer Prozessoren einer computerbasierten Zentraleinheit, derart, dass die Zentraleinheit Bestellanfragen für Multimediainhalte/Audioinhalte von Kommunikationsendgeräten über ein Telekommunikationsnetz empfängt, und die Multimediainhalte/Audioinhalte über ein Telekommunikationsnetz jeweils entsprechend einer Bestellanfrage an eine von mehreren geografisch verteilten, von der Zentraleinheit entfernten und von den Kommunikationsendgeräten getrennten Wiedergabeeinheiten zum Wiedergeben der Multimediainhalte/Audioinhalte übermittelt. Vorzugsweise umfasst das Computerprogrammprodukt ein computerlesbares Medium, auf welchem die Computerprogrammcodemittel gespeichert sind.

### Kurze Beschreibung der Zeichnungen

Nachfolgend wird eine Ausführung der vorliegenden Erfindung anhand eines Beispieles beschrieben. Das Beispiel der Ausführung wird durch die folgenden beigelegten Figuren illustriert:
Figur 1 zeigt ein Blockdiagramm, welches schematisch eine computerbasierte Zentraleinheit illustriert, welche zum Empfang von Bestellanfragen für Audioinhalte mit Kommunikationsendgeräten verbindbar ist, und welche zur Wiedergabe der Audioinhalte mit geografisch verteilten, von der Zentraleinheit entfernten Wiedergabeeinheiten verbindbar ist.
Figur 2 zeigt ein Flussdiagramm, das ein Beispiel eines vereinfachten Verfahrensablaufs und Datenaustauschs bei der Anforderung und Wiedergabe von Audioinhalten darstellt.

### Wege zur Ausführung der Erfindung

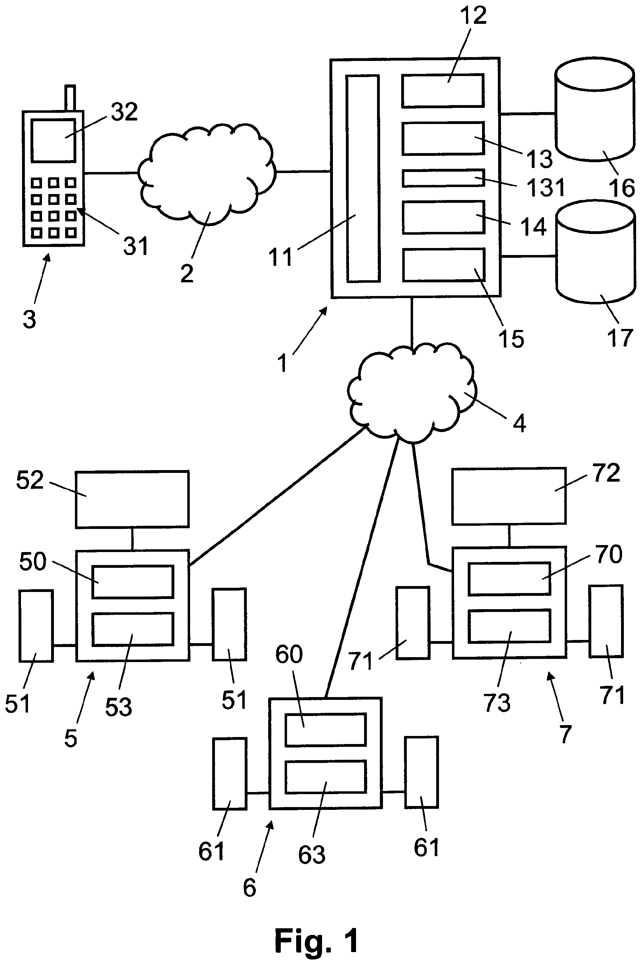

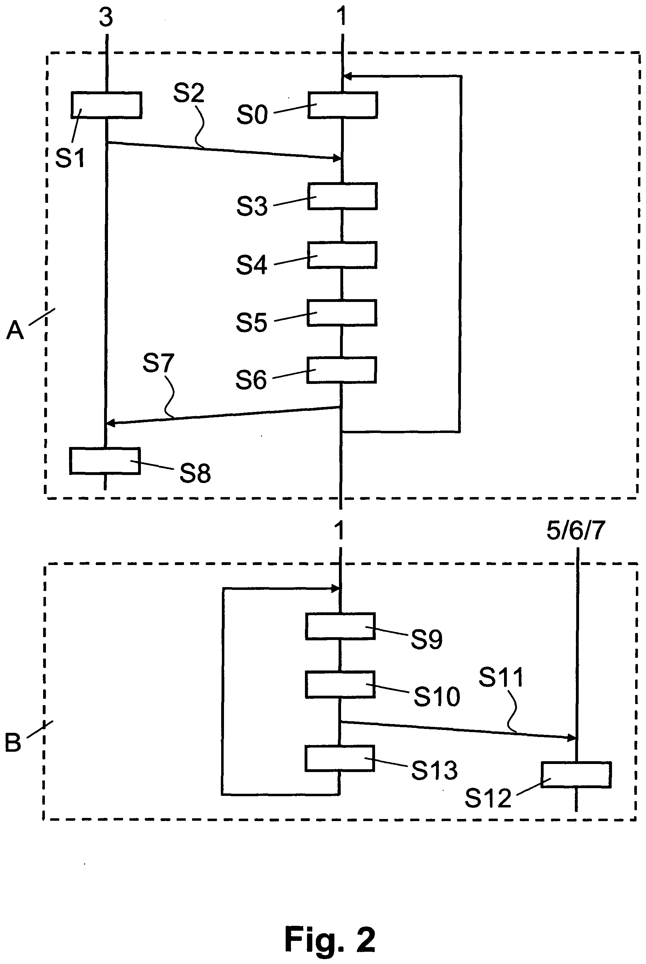

In der Figur 1 bezeichnet das Bezugszeichen 1 eine computerbasierte Zentraleinheit zum Empfangen von Bestellanfragen für die Wiedergabe von Multimediainhalten, insbesondere von Audioinhalten und/oder Videoinhalten, und zum Verbreiten der angeforderten Audioinhalte und/oder Videoinhalte an geografisch verteilte und von der Zentraleinheit 1 entfernte Wiedergabeeinheiten 5, 6, 7. Die Zentraleinheit 1 umfasst einen oder mehrere Computer mit jeweils einem oder mehreren Prozessoren. Die Zentraleinheit 1 ist eingerichtet über das Telekommunikationsnetz 2 mit externen Kommunikationsendgeräten 3 zu kommunizieren, und über das Telekommunikationsnetz 4 mit den externen Wiedergabeeinheiten 5, 6, 7 zu kommunizieren. Die Zentraleinheit 1 umfasst zudem verschiedene funktionale Module, nämlich ein Empfangsmodul 11, ein Selektionsmodul 12, ein Zeitplanungsmodul 13 mit einer Warteschlage 131, ein Content-Server 14 sowie einen Streaming-Server 15. Die funktionalen Module sind vorzugsweise als programmierte Softwaremodule ausgeführt. Der Computerprogrammcode der Softwaremodule ist Teil eines Computerprogrammprodukts und ist vorzugsweise in einem Computer der Zentraleinheit 1 gespeichert, auf einem computerlesbaren Datenträger, der fest oder entfernbar mit dem Computer verbunden ist. Die Funktionen der funktionalen Module werden später detaillierter mit Bezug zu der Figur 2 beschrieben. Die Zentraleinheit 1 verfügt auch über Datenbanken, die gemeinsam mit den funktionalen Modulen auf einem Computer ausgeführt sind, oder auf einem separaten, beispielsweise über eine Netzwerkverbindung (z.B. Internet), verbundenen Computer ausgeführt sind. Die Datenbanken umfassen eine Audio/Videodatenbank 16 mit Audio- und/oder Videodateien, die Audio- und/oder Videoinhalte definieren (insbesondere Musikstücke und/oder Musikvideos), sowie eine Inhaltsdatenbank 17, die weitere Dateninhalte umfasst, z.B. Werbeinformationen in Form von Text-, Bild-, Audio- und/oder Videodaten.

Das Telekommunikationsnetz 2 umfasst vorzugsweise ein drahtloses Mobilfunknetz, z.B. ein GSM-Netz (Global System for Mobile Communication), ein UMTS-Netz (Universal Mobile Telephone System) oder ein anderes, beispielsweise satellitenbasiertes Mobilfunknetz, oder ein WLAN (Wireless Local Area Network). Je nach Ausführungsvariante umfasst das Telekommunikationsnetz 2 zudem auch ein Festnetz, z.B. das öffentliche geschaltete Telefonnetz, ein ISDN-Netz (Integrated Services Digital Network), ein LAN (Local Area Network) oder vorzugsweise das Internet (IP-basiertes Netz) oder ein Intranet. Das Telekommunikationsnetz 4 umfasst vorzugsweise ein Festnetz, beispielsweise ausgestaltet wie im Zusammenhang mit Telekommunikationsnetz 2 beschrieben. Die Telekommunikationsnetze 2 und 4 können auch überlappen oder identisch sein.

Das Kommunikationsendgerät 3 ist stellvertretend für eine Vielzahl von Kommunikationsendgeräten dargestellt, welche eingerichtet sind, über das Telekommunikationsnetz 2 mit der Zentraleinheit 1 zu kommunizieren. Das Kommunikationsendgerät 3 ist vorzugsweise ein mobiles, tragbares Kommunikationsendgerät, z.B. ein Mobilfunktelefon, ein PDA-Computer (Personal Digital Assistant), ein Notebook-Computer, ein Laptop-Computer oder eine Computerspielvorrichtung, z.B. eine Playstation. In einer alternativen Ausführung ist das Kommunikationsendgerät 3 ein fest installiertes Kommunikationsendgerät, beispielsweise ein PC. Das Kommunikationsendgerät 3 umfasst Eingabeelemente 31 und eine Anzeige 32 für die Interaktion mit dem Benutzer.

Die Wiedergabeeinheiten 5, 6, 7 sind vorzugsweise computerbasiert und umfassen einen Streaming-Client 50 sowie einen Videotreiber und/oder Mediaplayer 53, 63, 73, die vorzugsweise als programmierte Softwaremodule ausgeführt sind. Die Wiedergabeeinheiten 5, 6, 7 können auch als IP Radio oder als Media Bridge ausgeführt sein. Die Wiedergabeeinheiten 5, 6, 7 sind eingerichtet über das Telekommunikationsnetz 4 mit der Zentraleinheit 1 zu kommunizieren. Die Wiedergabeeinheiten 5, 6, 7 umfassen zudem jeweils mindestens einen Leistungsverstärker zu Verstärkung des durch die Audiodaten definierten elektrischen Audiosignals zur Wiedergabe der Audioinhalte, und elektroakustische Wandler 51, 61, 71 (Lautsprecher) für die hörbare Wiedergabe von Audioinhalten basierend auf dem verstärkten Audiosignal. Der Leistungsverstärker und die elektroakustischen Wandler entsprechen beispielsweise einer handelsüblichen Stereoanlage für den professionellen Einsatz. In einer Ausführungsvariante umfassen mindestens gewisse Wiedergabeeinheiten 5, 7 zudem eine durch einen Videotreiber 53, 73 gesteuerte Anzeige 52, 72 zur sichtbaren Wiedergabe von Videoinhalten, die durch Videodaten definiert sind. Die Anzeigen 52, 72 sind beispielsweise LCD (Liquid Crystal Display) oder Plasma Anzeigen. Die Wiedergabeeinheiten 5, 6, 7 umfassen beispielsweise einen PC auf dem der Streaming-Client 50 und der Videotreiber respektive Mediaplayer 53, 63, 73 ausgeführt werden, wobei der PC sowohl mit der Anzeige 52, 72 als auch über den Leistungsverstärker mit den akustischen Wandlern 51, 61, 71 verbunden ist. Die Wiedergabeeinheiten 5, 6, 7 sind typischerweise in verschiedenen geografisch verteilten Lokalitäten angeordnet. Die Wiedergabeeinheiten können insbesondere mittels handelsüblicher Vorrichtungen implementiert werden.

In den folgenden Abschnitten wird mit Bezug auf die Figur 2 ein möglicher Verfahrensablauf und Datenaustausch bei der Anforderung und der Wiedergabe von Audioinhalten beschrieben.

Wie in der Figur 2 schematisch dargestellt ist, ist das Verfahren in zwei getrennte, parallel zueinander ablaufende Blöcke A und B aufteilbar. Block A umfasst eine mögliche Schrittsequenz für die Bestellanfrage eines Audioinhalts von der Zentraleinheit 1 mittels eines Kommunikationsendgeräts 3. Block B umfasst eine mögliche Schrittsequenz für die Übermittlung und Wiedergabe von angeforderten Audioinhalten.

Im Schritt S1 wird im Kommunikationsendgerät 3 eine Bestellanfrage (Anforderung) für die Wiedergabe eines bestimmten Audioinhalts und/oder eines Videoinhalts bereitgestellt. Zur benutzergesteuerten Bestimmung der zu verwendenden Wiedergabeeinheit 5, 6, 7 hat der Benutzer die Möglichkeit eine oder mehrere Wiedergabeeinheit(en) 5, 6, 7 durch einen Namen oder eine Kennung zu definieren, wobei der Name oder die Kennung die Örtlichkeit bestimmt, in der Wiedergabeeinheit 5, 6, 7 angeordnet ist oder direkt und explizit die Wiedergabeeinheit 5, 6, 7 bestimmt. Der Name oder die Kennung ist beispielsweise in der Örtlichkeit angezeigt. Typischerweise wird der Audio- und/oder Videoinhalt über eine Wiedergabeeinheit 5, 6, 7 wiedergegeben, es ist jedoch auch möglich mehrere Wiedergabeeinheiten 5, 6, 7 für die Wiedergabe zu spezifizieren. Die Wahl des wiederzugebenden Inhalts und/oder der zu verwendenden Wiedergabeeinheit(en) 5, 6, 7 erfolgt beispielsweise durch Selektion aus einer Liste unter Verwendung der Anzeige 32 und Eingabeelemente 31, durch Eingabe eines Namens oder einer Kennung per Eingabeelemente 31, oder über ein Spracherkennungsmodul oder über sprachgesteuerte Menuführung (Interactive Voice Response, IVR). Listen von Audio- und/oder Videoinhalten mit diesbezüglichen Namen oder Kennungen sind beispielsweise in der Örtlichkeit aufgedruckt (z.B. auf einer Papierserviette, einem Tisch, einer Wand oder einem Poster), auf einer Anzeige angegeben oder als Dateien in das Kommunikationsendgerät 3 ladbar, z.B. von der Zentraleinheit 1 oder über eine Geräteschnittstelle (z.B. Bluetooth) von der Wiedergabeeinheit 5, 6, 7. Für die benutzerspezifizierte Selektion der Wiedergabeeinheit(en) 5, 6, 7 können im Kommunikationsendgerät 3 auch grafische Benutzerschnittstellen mit ortsabhängiger Darstellung von digitalen geografischen Karten eingesetzt werden, auf denen selektierbare Wiedergabeeinheiten 5, 6, 7 angezeigt sind. Schliesslich wird in einer Ausführungsvariante mittels eines Positionsbestimmungsmoduls automatisch die aktuelle geografische Position des Benutzers respektive des Kommunikationsendgeräts 3 bestimmt, beispielsweise mittels eines GPS-Empfängers, oder auf der Basis von Netzwerkparametern wie Zellidentifizierung oder Basisstationidentifizierung. In einer Variante, kann der Benutzer eine Option setzen, die der Zentraleinheit anzeigt, dass die Position des Benutzers respektive des Kommunikationsendgeräts 3 erst im Moment kurz vor der geplanten Wiedergabe der Inhalte erfolgen soll, so dass die Wiedergabe über eine andere Wiedergabeeinheit 5, 6, 7 erfolgt, wenn sich der Benutzer in die Lokalität mit dieser anderen Wiedergabeeinheit 5, 6, 7 verschiebt. Der Benutzer hat auch die Möglichkeit zusammen mit der Bestellanfrage zusätzliche Begleitdaten, z.B. Text-, Bild-, Audio- und/oder Videodaten, an die Zentraleinheit 1 zu übermitteln.

Im Schritt S2 erfolgt die Übermittlung der Bestellanfrage vom Kommunikationsendgerät 3 über das Telekommunikationsnetz 2 an die Zentraleinheit 1. Die bestimmten Ortsangaben werden als Teil der Bestellanfrage oder in separaten Protokolldateneinheiten zusammen mit der Bestellanfrage übermittelt. Die Übermittlung der Bestellanfrage erfolgt beispielsweise mittels SMS (Short Messaging Services), MMS (Multimedia Services), IP-Anfragen (Internet Protocol), z.B. über ein WAP-Portal (Wireless Application Platform), IVR (Interactive Voice Response oder anderen geeigneten Datentelegrammen oder Datenübermittlungsdiensten. Das Empfangsmodul 11 empfängt die übermittelte Bestellanfrage, die Angaben zur Bestimmung der Wiedergabeeinheit(en) sowie die allfälligen Begleitdaten.

Im Schritt S3, selektiert das Selektionsmodul 12 die zu verwendende(n) Widergabeeinheit(en) 5, 6, 7 basierend auf den mit der Bestellanfrage empfangenen Angaben zur Bestimmung der Wiedergabeeinheit. Falls eine benutzerdefinierte Bestimmung vorgenommen wurde, werden eine oder mehrere der Wiedergabeeinheiten 5, 6, 7 auf Grund der angegebenen Namen respektive Kennungen selektiert. Vorzugsweise werden die Wiedergabeeinheiten 5, 6, 7 jedoch automatisch basierend auf den Ortsangaben selektiert, die mit der Bestellanfrage empfangen wurde. Die Ortsangaben werden entweder vom Benutzer angegeben oder automatisch durch das Kommunikationsendgerät 3 bestimmt, wie oben beschrieben wurde.

Im Schritt S4, bezieht der Content-Server 14 von der Audio/Videodatenbank 16 die Audio- und/oder Videodateien die den in der Bestellanfrage spezifizierten Audio- und/oder Videoinhalten entsprechen.

Im Schritt S5, stellt der Content-Server 14 den Datenstrom für die Übermittlung an die selektierte(n) Wiedergabeeinheit(en) 5, 6, 7 bereit. Der Datenstrom umfasst neben den Audio- und/oder Videodateien für die angeforderten Audio- und/oder Videoinhalte auch allfällige vom Benutzer übermittelte Begleitdaten, z.B. für Grussbotschaften in Text-, Bild-, Audio- und/oder Videoform, sowie mögliche weitere Inhalte aus der Inhaltsdatenbank 17, z.B. Werbebotschaften in Text-, Bild-, Audio- und/oder Videoform.

Im Schritt S6, fügt das Zeitplanungsmodul 13 die Bestellanfrage respektive ein entsprechendes zugeordnetes Datenelement in die Warteschlange 131 ein. Zudem ermittelt das Zeitplanungsmodul 13 auf Grund der Position der eingefügten Bestellanfrage in der Warteschlange 131 sowie der Datenlängen respektive Wiedergabezeiten der vorher wiederzugebenden Inhalte (Datenströmen) eine geplante Spielzeit für die Wiedergabe des betreffenden Audio- und/oder Videoinhalts über die betreffende(n) Wiedergabeeinheit(en) 5, 6, 7. Je nach Ausführungsvariante werden in der Warteschlange 131 Bestellanfragen für sämtliche durch die Zentraleinheit 1 gesteuerten Wiedergabeeinheiten 5, 6, 7 eingefügt, oder es wird in der Zentraleinheit 1 jeder der Wiedergabeeinheiten 5, 6, 7 eine separate Warteschlange 131 zugeordnet.

Die geplante Spielzeit wird vom Zeitplanungsmodul 13 im Schritt S7 über das Telekommunikationsnetz 2 an das Kommunikationsendgerät 3 des betreffenden Benutzers übermittelt, wo sie im Schritt S8 auf der Anzeige 32 dargestellt wird.

An dieser Stelle soll auch festgehalten werden, dass das Zeitplanungsmodul 13 zudem die Wiedergabe von Audioinhalten planen kann, die vom Betreiber der betreffenden Widergabeeinheit(en) 5, 6, 7 (und/oder von einem Werbesponsor) beispielsweise gemäss einer Liste für Hintergrundmusik (und/oder Werbeblöcke) angefordert werden. Bestellanfragen für Audioinhalte werden beispielsweise so in der Warteschlange 131 geplant, dass Benutzerwünsche grösste Priorität haben und Betreiberwünsche nur bei fehlenden Benutzerwünschen berücksichtigt werden, oder dass Benutzerwünsche und Betreiberwünsche zu festgelegten Anteilen und/oder Reihenfolgen wiedergegeben werden, wobei bei fehlenden Benutzerwünschen vorhandene Betreiberwünsche immer abgespielt werden.

Im Schritt S0, wartet das Empfangsmodul 11 auf weitere Bestellanfragen, die von Kommunikationsendgeräten 3 über das Telekommunikationsnetz 2 übermittelt werden.

Im Schritt S9, bestimmt das Zeitplanungsmodul 13 in der Warteschlange 131 den Eintrag und den zugeordneten Datenstrom, der als nächster wiederzugeben ist.

Im Schritt S10, beginnt der Streaming-Server 15 die kontinuierliche Übermittlung des im Schritt S9 bestimmten Datenstroms. Je nach Ausführungsvariante wird der Streaming-Modus zwischen Empfangsmodul 11 und Streaming-Server 15 einmal für die Übermittlung mehrerer (z.B. nacheinander folgenden) Audioinhalte erstellt, z.B. täglich oder bei der Anforderung des ersten Audioinhalts, etc.

Im Schritt S11 übermittelt der Streaming-Server 15 den bestimmten Datenstrom kontinuierlich an die betreffende(n) Wiedergabeeinheit(en) 5, 6, 7, wo der Datenstrom fortwährend durch den Streaming-Client 50, 60, 70 entgegengenommen wird.

Im Schritt S12 gibt der Streaming-Client 50, 60, 70 den empfangenen Datenstrom mittels des Videotreibers oder Mediaplayers 53, 63, 73 fortwährend hörbar über die elektroakustischen Wandler 51, 61, 71 und/oder sichtbar über die Anzeigen 52, 62, 72 wieder. Kombinierte Audio- und Videoinhalte werden synchronisiert wiedergegeben. In den Begleitdaten enthaltene Grussbotschaften in Text-, Bild-, Audio- und/oder Videoform werden wahlweise vor, während oder nach dem Audio- und/oder Videoinhalt wiedergegeben.

Im Schritt S13 überprüft das Zeitplanungsmodul 13 in der Warteschlange 131, ob weitere Bestellanfragen für die Wiedergabe von Audio- und/oder Videoinhalten zu bearbeiten sind und fährt gegebenenfalls im Schritt S9 mit der Bestimmung des nächsten wiederzugebenden Inhalts fort. Ansonsten wartet das Zeitplanungsmodul 13 bis im Schritt S6 neue Bestellanfragen für die Wiedergabe von Audio- und/oder Videoinhalten in die Warteschlange 131 eingefügt werden. Zusammen mit der Wiedergabe der angeforderten Inhalte können auch kurze Identifizierungen von wenigen Zeichen angezeigt werden, z.B. ein einfacher URL (Uniform Resource Locator) oder Bestellcode, mittels derer der wiedergegebene Audio- und/oder Videoinhalt von anwesenden Benutzern automatisch bezogen oder bestellt werden kann, z.B. als Download auf sein Kommunikationsendgerät 3, z.B. ein Mobilfunktelefon und/oder MP3-Abspielgerät, oder als Speichermedium (CD, DVD) per Post.

Die Bestellanfrage und Wiedergabe der Audio- und/oder Videodaten kann kostenfrei eingerichtet werden, vorzugsweise gesponsert durch eingefügte Werbeinhalte, oder dem betreffenden Benutzer als Telekommunikationskosten verrechnet werden.

Der Fachmann wird verstehen, dass die oben beschriebene Sequenz der Schritte nur beispielhaft ist und auch andere Reihenfolgen der Schritte zum Anfordern und Wiedergeben der Audio- und/oder Videoinhalte verwendbar sind, beispielsweise kann die Erstellung des Zeitplans und die Bestimmung der geplanten Wiedergabezeit im Schritt S6 auch vor der Bereitstellung des Datenstroms durchgeführt werden.

In weiteren Ausführungsvarianten werden dem Benutzer entsprechend der Bestellanfrage zudem von der Zentraleinheit 1 auch Audio- und/oder Videodateien respektive ein diesbezüglicher Link (URL) über das Telekommunikationsnetz 2 auf das Kommunikationsendgerät 3 geladen oder wahlweise die Bestellung eines Datenträgers (CD, DVD, etc) mit den darauf gespeicherten Dateien eingeleitet. Beispielsweise wird ein bestellte und/oder bezahlte Audio- und/oder Videodatei an einen entsprechenden (Musik- und/oder Video-) Server des Benutzers übermittelt.

## Patentansprüche

1. System zum Anfordern und Wiedergeben von Audioinhalten, umfassend:
ein Empfangsmodul (11) zum Empfangen von Bestellanfragen für Audioinhalte, welche Bestellanfragen mittels Kommunikationsendgeräten (3) über ein erstes Telekommunikationsnetz (2) übermittelt werden,
einen Content-Server (14) zum Bereitstellen von Audiodaten, die einem in einer betreffenden Bestellanfrage spezifizierten Audioinhalt entsprechen,
eine computerbasierte Zentraleinheit (1) zum Übermitteln von bereitgestellten Audiodaten über ein zweites Telekommunikationsnetz (4) an mehrere geografisch verteilte, von den Kommunikationsendgeräten (3) getrennte und von der computerbasierten Zentraleinheit (1) entfernte Wiedergabeeinheiten (5, 6, 7),
wobei das Empfangsmodul (11) und der Content-Server (14) in der Zentraleinheit (1) angeordnet sind,
**dadurch gekennzeichnet,**
**dass** die Zentraleinheit (1) eingerichtet ist, mit den Bestellanfragen jeweils eine Ortsangabe entgegenzunehmen und basierend auf der Ortsangabe eine Wiedergabeeinheit (5, 6, 7) zu selektieren, und
**dass** die Zentraleinheit (1) eingerichtet ist, die bereitgestellten Audiodaten jeweils entsprechend der betreffenden Bestellanfrage über das zweite Telekommunikationsnetz (4) an die selektierte Wiedergabeeinheit (5, 6, 7) zur fortwährenden Wiedergabe der Audioinhalte durch die selektierte Wiedergabeeinheit (5, 6, 7) zu übermitteln.

2. System nach Anspruch 1, **dadurch gekennzeichnet, dass** das Empfangsmodul (11) eingerichtet ist, mit den Bestellanfragen jeweils eine Ortsangabe zur Bestimmung der selektierten Wiedergabeeinheit (5, 6, 7) entgegenzunehmen, welche mindestens eines umfasst aus Ortsangabe, wo die Wiedergabeeinheit (5, 6, 7) lokalisiert ist, und Ortsangabe, wo das anfordernde Kommunikationsendgerät (3) positioniert ist.

3. System nach Anspruch 1, **dadurch gekennzeichnet, dass** die Zentraleinheit (1) eingerichtet ist, die selektierte Wiedergabeeinheit (5, 6, 7) zu bestimmen basierend auf mindestens einem aus der aktuellen geografischen Position des Kommunikationsendgeräts (3) bei der Übermittlung der betreffenden Bestellanfrage, und der aktuellen geografischen Position des Kommunikationsendgeräts (3) bei einer geplanten Wiedergabe der Audioinhalte.

4. System nach einem der Ansprüche 1 bis 3, **dadurch gekennzeichnet, dass** die Zentraleinheit (1) ein Zeitplanungsmodul (13) umfasst, das eingerichtet ist, eine empfangen Bestellanfrage für einen Audioinhalt in eine Warteschlange (131) einzufügen, eine geplante Zeit für die Wiedergabe des betreffenden Audioinhalts zu bestimmen, und die geplante Zeit zur Information eines Benutzers an das anfordernde Kommunikationsendgerät (3) zu übermitteln.

5. System nach einem der Ansprüche 1 bis 4, **dadurch gekennzeichnet, dass** die Zentraleinheit (1) einen Streaming Server (15) umfasst, der eingerichtet ist, angeforderte Audioinhalte jeweils als kontinuierlicher Datenstrom an die Wiedergabeeinheit (5, 6, 7) zu übermitteln.

6. System nach einem der Ansprüche 1 bis 5, **dadurch gekennzeichnet, dass** mindestens gewisse der Audioinhalte mit Videoinhalten kombiniert sind, und dass die Zentraleinheit (1) eingerichtet ist, die kombinierten Audio-/Videoinhalte zur hörbaren und sichtbaren Wiedergabe an die Wiedergabeeinheiten (5, 6, 7) zu übermitteln.

7. System nach einem der Ansprüche 1 bis 6, **dadurch gekennzeichnet, dass** das Empfangsmodul (11) eingerichtet ist, die Bestellanfragen für Audioinhalte über ein Mobilfunknetz von mobilen Kommunikationsendgeräten (3) zu empfangen.

8. System nach einem der Ansprüche 1 bis 7, **gekennzeichnet durch** eine Vielzahl von Bestellkarten, die Angaben und zugeordnete Kennungen von bestellbaren Audioinhalten umfassen.

9. Verfahren zum Anfordern und Wiedergeben von Audioinhalten, umfassend:
Übermitteln von Bestellanfragen (S2) für Audioinhalte mittels Kommunikationsendgeräten (3) über ein erstes Telekommunikationsnetz (2) an eine computerbasierte Zentraleinheit (1),
Bereitstellen in einem Content-Server (14) der computerbasierten Zentraleinheit (1) von Audiodaten, die einem in einer betreffenden Bestellanfrage spezifizierten Audioinhalt entsprechen, und
Übermitteln der bereitgestellten Audiodaten (S11) von der computerbasierten Zentraleinheit (1) über ein zweites Telekommunikationsnetz (4) jeweils entsprechend einer Bestellanfrage an eine selektierte Wiedergabeeinheit (5, 6, 7) von mehreren geografisch verteilten, von der Zentraleinheit (1) entfernten und von den Kommunikationsendgeräten (3) getrennten Wiedergabeeinheiten (5, 6, 7) zum Wiedergeben der Audioinhalte, **gekennzeichnet durch** Selektieren der Wiedergabeeinheit (5, 6, 7) **durch** die computerbasierte Zentraleinheit (1) basierend auf mit den Bestellanfragen übermittelten Ortsangaben, und
Übermitteln der bereitgestellten Audiodaten **durch** die computerbasierte Zentraleinheit (1) jeweils entsprechend der betreffenden Bestellanfrage über das zweite Telekommunikationsnetz (4) an die selektierte Wiedergabeeinheit (5, 6, 7) zur fortwährenden Wiedergabe der Audioinhalte **durch** die selektierte Wiedergabeeinheit (5, 6, 7).

10. Verfahren nach Anspruch 9, **dadurch gekennzeichnet, dass** mit den Bestellanfragen jeweils eine Ortsangabe zur Bestimmung der selektierten Wiedergabeeinheit (5, 6, 7) an die Zentraleinheit (1) übermittelt wird, welche mindestens eines umfasst aus Ortsangabe, wo die Wiedergabeeinheit (5, 6, 7) lokalisiert ist, und Ortsangabe, wo das anfordernde Kommunikationsendgerät (3) positioniert ist.

11. Verfahren nach Anspruch 9, **dadurch gekennzeichnet, dass** die selektierte Wiedergabeeinheit (5, 6, 7) bestimmt wird basierend auf mindestens einem aus der aktuellen geografischen Position des Kommunikationsendgeräts (3) bei der Übermittlung der betreffenden Bestellanfrage, und der aktuellen geografischen Position des Kommunikationsendgeräts (3) bei einer geplanten Wiedergabe der Audioinhalte.

12. Verfahren nach einem der Ansprüche 9 bis 11, **dadurch gekennzeichnet, dass** die Zentraleinheit (1) eine empfangene Bestellanfrage für einen Audioinhalt in eine Warteschlange (131) einfügt (S6), eine geplante Zeit für die Wiedergabe des betreffenden Audioinhalts bestimmt, und die geplante Zeit zur Information eines Benutzers an das anfordernde Kommunikationsendgerät (3) übermittelt (S7).

13. Verfahren nach einem der Ansprüche 9 bis 12, **dadurch gekennzeichnet, dass** die Zentraleinheit (1) angeforderte Audioinhalte jeweils als kontinuierlicher Datenstrom an die Wiedergabeeinheit (5, 6, 7) übermittelt (S11).

14. Verfahren nach einem der Ansprüche 9 bis 13, **dadurch gekennzeichnet, dass** mindestens gewisse der Audioinhalte mit Videoinhalten kombiniert sind, und dass die Zentraleinheit (1) die kombinierten Audio-/Videoinhalte zur hörbaren und sichtbaren Wiedergabe an die Wiedergabeeinheiten (5, 6, 7) übermittelt.

15. Verfahren nach einem der Ansprüche 9 bis 14, **dadurch gekennzeichnet, dass** die Bestellanfragen für Audioinhalte von mobilen Kommunikationsendgeräten (3) über ein Mobilfunknetz an die Zentraleinheit (1) übermittelt werden.

16. Computerprogrammprodukt umfassend Computerprogrammcodemittel zur Steuerung eines oder mehrerer Prozessoren einer computerbasierten Zentraleinheit (1), derart, dass die Zentraleinheit (1)
Bestellanfragen für Audioinhalte von Kommunikationsendgeräten (3) über ein erstes Telekommunikationsnetz (2) empfängt,
Audiodaten bereitstellt, die einem in einer betreffenden Bestellanfrage spezifizierten Audioinhalt entsprechen, und
die bereitgestellten Audiodaten über ein zweites Telekommunikationsnetz (4) jeweils entsprechend einer Bestellanfrage an eine selektierte Wiedergabeeinheit (5, 6, 7) von mehreren geografisch verteilten, von der Zentraleinheit (1) entfernten und von den Kommunikationsendgeräten (3) getrennten Wiedergabeeinheiten (5, 6, 7) zum Wiedergeben der Audioinhalte übermittelt, **gekennzeichnet durch** weitere Computerprogrammcodemittel, die die Prozessoren der Zentraleinheit (1) derart steuern, dass die Zentraleinheit (1)
die Wiedergabeeinheit (5, 6, 7) basierend auf einer jeweils mit den Bestellanfragen empfangenen Ortsangabe selektiert, und
die bereitgestellten Audiodaten jeweils entsprechend der betreffenden Bestellanfrage über das zweite Telekommunikationsnetz (4) an die selektierte Wiedergabeeinheit (5, 6, 7) übermittelt zur fortwährenden Wiedergabe der Audioinhalte **durch** die selektierte Wiedergabeeinheit (5, 6,7).

17. Das Computerprogrammprodukt nach Anspruch 16, **dadurch gekennzeichnet, dass** es weitere Computerprogrammcodemittel umfasst, die die Prozessoren der Zentraleinheit (1) derart steuern, dass die Zentraleinheit (1) mit den Bestellanfragen jeweils eine Ortsangabe zur Bestimmung der selektierten Wiedergabeeinheit (5, 6, 7) entgegennimmt, welche mindestens eines umfasst aus Ortsangabe, wo die Wiedergabeeinheit (5, 6, 7) lokalisiert ist, und Ortsangabe, wo das anfordernde Kommunikationsendgerät (3) positioniert ist.

18. Das Computerprogrammprodukt nach einem der Ansprüche 16 oder 17, **dadurch gekennzeichnet, dass** es weitere Computerprogrammcodemittel umfasst, die die Prozessoren der Zentraleinheit (1) derart steuern, dass die Zentraleinheit (1) eine empfangen Bestellanfrage für einen Audioinhalt in eine Warteschlange (131) einfügt, eine geplante Zeit für die Wiedergabe des betreffenden Audioinhalts bestimmt, und die geplante Zeit zur Information eines Benutzers an das anfordernde Kommunikationsendgerät (3) übermittelt.

19. Das Computerprogrammprodukt nach einem der Ansprüche 16 bis 18, **dadurch gekennzeichnet, dass** es weitere Computerprogrammcodemittel umfasst, die die Prozessoren der Zentraleinheit (1) derart steuern, dass die Zentraleinheit (1) die angeforderten Audioinhalte jeweils als kontinuierlicher Datenstrom an die Wiedergabeeinheit (5, 6, 7) übermittelt.

## Claims

1. System for requesting and reproducing audio content, comprising:
a reception module (11) for receiving order requests for audio content, which order requests are transmitted by means of communication terminals (3) via a first telecommunication network (2),
a content server (14) for providing audio data that correspond to an audio content specified in a relevant order request,
a computer-based central unit (1) for transmitting provided audio data via a second telecommunication network (4) to multiple geographically distributed reproduction units (5, 6, 7) that are separate from the communication terminals (3) and remote from the computer-based central unit (1),
wherein the reception module (11) and the content server (14) are arranged in the central unit (1),
**characterized**
**in that** the central unit (1) is set up to accept a respective location statement with the order requests and to take the location statement as a basis for selecting a reproduction unit (5, 6, 7), and
**in that** the central unit (1) is set up to transmit the provided audio data, in each case in accordance with the relevant order request, via the second telecommunication network (4) to the selected reproduction unit (5, 6, 7) for the purpose of continual reproduction of the audio content by the selected reproduction unit (5, 6, 7).

2. System according to Claim 1, **characterized in that** the reception module (11) is set up to accept a respective location statement for determining the selected reproduction unit (5, 6, 7) with the order requests, which location statement comprises at least one from a location statement concerning where the reproduction unit (5, 6, 7) is located and a location statement concerning where the requesting communication terminal (3) is positioned.

3. System according to Claim 1, **characterized in that** the central unit (1) is set up to determine the selected reproduction unit (5, 6, 7) on the basis of at least one from the current geographical position of the communication terminal (3) when the relevant order request is transmitted and the current geographical position of the communication terminal (3) during a planned reproduction of the audio content.

4. System according to one of Claims 1 to 3, **characterized in that** the central unit (1) comprises a scheduling module (13) that is set up to add a received order request for an audio content to a queue (131), to determine a scheduled time for the reproduction of the relevant audio content and to transmit the scheduled time to the requesting communication terminal (3) in order to inform a user.

5. System according to one of Claims 1 to 4, **characterized in that** the central unit (1) comprises a streaming server (15) that is set up to transmit requested audio content as a respective continuous data stream to the reproduction unit (5, 6, 7).

6. System according to one of Claims 1 to 5, **characterized in that** at least certain instances of the audio content are combined with video content, and **in that** the central unit (1) is set up to transmit the combined audio/video content to the reproduction units (5, 6, 7) for the purpose of audible and visual reproduction.

7. System according to one of Claims 1 to 6, **characterized in that** the reception module (11) is set up to receive the order requests for audio content via a mobile radio network from mobile communication terminals (3).

8. System according to one of Claims 1 to 7, **characterized by** a multiplicity of order cards that comprise details and associated identifiers of orderable audio content.

9. Method for requesting and reproducing audio content, comprising:
transmission of order requests (S2) for audio content by means of communication terminals (3) via a first telecommunication network (2) to a computer-based central unit (1),
provision, in a content server (14) of the computer-based central unit (1), of audio data that correspond to an audio content specified in a relevant order request, and
transmission of the provided audio data (S11) from the computer-based central unit (1) via a second telecommunication network (4), in each case in accordance with an order request, to a selected reproduction unit (5, 6, 7) from multiple geographically distributed reproduction units (5, 6, 7), which are remote from the central unit (1) and separate from the communication terminals (3), for the purpose of reproducing the audio content, **characterized by**
selection of the reproduction unit (5, 6, 7) by the computer-based central unit (1) on the basis of location statements transmitted with the order requests, and
transmission of the provided audio data by the computer-based central unit (1), in each case in accordance with the relevant order request, via the second telecommunication network (4) to the selected reproduction unit (5, 6, 7) for the purpose of continual reproduction of the audio content via the selected reproduction unit (5, 6, 7).

10. Method according to Claim 9, **characterized in that** a respective location statement for determining the selected reproduction unit (5, 6, 7) is transmitted to the central unit (1) with the order requests, which location statement comprises at least one from a location statement concerning where the reproduction unit (5, 6, 7) is located and a location statement concerning where the requesting communication terminal (3) is positioned.

11. Method according to Claim 9, **characterized in that** the selected reproduction unit (5, 6, 7) is determined on the basis of at least one from the current geographical position of the communication terminal (3) when the relevant order request is transmitted and the current geographical position of the communication terminal (3) during a planned reproduction of the audio content.

12. Method according to one of Claims 9 to 11, **characterized in that** the central unit (1) adds a received order request for an audio content to a queue (131) (S6), determines a scheduled time for the reproduction of the relevant audio content and transmits the scheduled time to the requesting communication terminal (3) in order to inform a user (S7).

13. Method according to one of Claims 9 to 12, **characterized in that** the central unit (1) transmits requested audio content as a respective continuous data stream to the reproduction unit (5, 6, 7) (S11).

14. Method according to one of Claims 9 to 13, **characterized in that** at least certain instances of the audio content are combined with video content, and **in that** the central unit (1) transmits the combined audio/video content to the reproduction units (5, 6, 7) for the purpose of audible and visual reproduction.

15. Method according to one of Claims 9 to 14, **characterized in that** the order requests for audio content are transmitted from mobile communication terminals (3) via a mobile radio network to the central unit (1).

16. Computer program product comprising computer program code means for controlling one or more processors of a computer-based central unit (1) such that the central unit (1)
receives order requests for audio content from communication terminals (3) via a first telecommunication network (2),
provides audio data that correspond to an audio content specified in a relevant order request, and
transmits the provided audio data via a second telecommunication network (4), in each case in accordance with an order request, to a selected reproduction unit (5, 6, 7) from multiple geographically distributed reproduction units (5, 6, 7), which are remote from the central unit (1) and separate from the communication terminals (3), for the purpose of reproducing the audio content, **characterized by** further computer program code means that control the processors of the central unit (1) such that the central unit (1)
selects the reproduction unit (5, 6, 7) on the basis of a respective location statement received with the order requests, and
transmits the provided audio data, in each case in accordance with the relevant order request, via the second telecommunication network (4) to the selected reproduction unit (5, 6, 7) for the purpose of continual reproduction of the audio content by the selected reproduction unit (5, 6, 7).

17. Computer program product according to Claim 16, **characterized in that** it comprises further computer program code means that control the processors of the central unit (1) such that the central unit (1) accepts a respective location statement for determining the selected reproduction unit (5, 6, 7) with the order requests, which location statement comprises at least one from a location statement concerning where the reproduction unit (5, 6, 7) is located and a location statement concerning where the requesting communication terminal (3) is positioned.

18. Computer program product according to either of Claims 16 and 17, **characterized in that** it comprises further computer program code means that control the processors of the central unit (1) such that the central unit (1) adds a received order request for an audio content to a queue (131), determines a scheduled time for the reproduction of the relevant audio content and transmits the scheduled time to the requesting communication terminal (3) in order to inform a user.

19. Computer program product according to one of Claims 16 to 18, **characterized in that** it comprises further computer program code means that control the processors of the central unit (1) such that the central unit (1) transmits the requested audio content as a respective continuous data stream to the reproduction unit (5, 6, 7).

## Revendications

1. Système destiné à demander et restituer des contenus audio, comprenant :
un module de réception (11) destiné à recevoir des demandes de commandes de contenus audio, lesquelles demandes de commandes sont transmises au moyen de terminaux de communication (3) par l'intermédiaire d'un premier réseau de télécommunication (2),
un serveur de contenu (14) destiné à fournir des données audio qui correspondent à un contenu audio spécifié dans une demande de commande concernée,
une unité centrale informatisée (1) destinée à transmettre des données audio fournies par l'intermédiaire d'un second réseau de télécommunication (4) à une pluralité d'unités de restitution (5, 6, 7) géographiquement réparties, séparées des terminaux de communication (3) et distantes de l'unité centrale informatisée (1),
dans lequel le module de réception (11) et le serveur de contenu (14) sont disposés dans l'unité centrale (1),
**caractérisé en ce que** l'unité centrale (1) est conçue pour recevoir une indication de localisation et pour sélectionner une unité de restitution (5, 6, 7) sur la base de l'indication de localisation, et
**en ce que** l'unité centrale (1) est conçue pour transmettre les données audio fournies correspondant respectivement à la demande de commande concernée par l'intermédiaire du second réseau de télécommunication (4) à l'unité de restitution sélectionnée (5, 6, 7) pour une restitution continue des contenus audio par l'intermédiaire de l'unité de restitution (5, 6, 7) sélectionnée.

2. Système selon la revendication 1, **caractérisé en ce que** le module de réception (11) est conçu pour recevoir respectivement une indication de localisation avec la demande de commande pour déterminer l'unité de restitution (5, 6, 7) sélectionnée, laquelle indication de localisation comprend au moins l'une d'une indication de localisation indiquant où se trouve l'unité de restitution (5, 6, 7) et d'une indication de localisation indiquant où est positionné le terminal de communication (3) demandeur.

3. Système selon la revendication 1, **caractérisé en ce que** l'unité centrale (1) est conçue pour déterminer l'unité de restitution (5, 6, 7) sélectionnée sur la base d'au moins l'une de la position géographique actuelle du terminal de communication (3) lors de la transmission de la demande de commande concernée, et de la position géographique actuelle du terminal de communication (3) lors d'une restitution planifiée des contenus audio.

4. Système selon l'une quelconque des revendications 1 à 3, **caractérisé en ce que** l'unité centrale (1) comprend un module de planification temporelle (13) qui est conçu pour insérer une demande de commande reçue concernant un contenu audio dans une file d'attente (131), pour déterminer un instant planifié pour la restitution du contenu audio concerné et pour transmettre au terminal de communication demandeur (3) demandeur l'instant planifié afin d'en informer un utilisateur.

5. Système selon l'une quelconque des revendications 1 à 4, **caractérisé en ce que** l'unité centrale (1) comprend un serveur de diffusion en continu (15) qui est conçu pour transmettre respectivement à l'unité de restitution (5, 6, 7) des contenus audio demandés sous la forme d'un flux de données continu.

6. Système selon l'une quelconque des revendications 1 à 5, **caractérisé en ce qu'**au moins certains des contenus audio sont combinés à des contenus vidéo et **en ce que** l'unité centrale (1) est conçue pour transmettre aux unités de restitution (5, 6, 7) les contenus audio/vidéo à des fins de restitution audio et vidéo.

7. Système selon l'une quelconque des revendications 1 à 6, **caractérisé en ce que** le module de réception (11) est conçu pour recevoir les demandes de commandes concernant des contenus audio par l'intermédiaire d'un réseau mobile en provenance de terminaux de communication mobiles (3).

8. Système selon l'une quelconque des revendications 1 à 7, **caractérisé par** une pluralité de cartes de commande qui comprennent des indications et des identifiants associés de contenus audio pouvant être commandés.

9. Procédé de demande et de restitution de contenus audio, consistant à :
transmettre des demandes de commandes (S2) concernant des contenus audio au moyen de terminaux de communication (3) par l'intermédiaire d'un premier réseau de télécommunication (2) à une unité centrale informatisée (1),
fournir, sur un serveur de contenu (14) de l'unité centrale informatisée (1), des données audio qui correspondent à un contenu audio spécifié dans une demande de commande concernée, et
transmettre les données audio fournies (S11) depuis l'unité centrale informatisée (1) par l'intermédiaire d'un second réseau de télécommunication (4) d'une manière qui correspond respectivement à une demande de commande à une unité de restitution (5, 6, 7) sélectionnée parmi une pluralité d'unités de restitution (5, 6, 7) géographiquement réparties,
distantes de l'unité centrale (1) et séparées des terminaux de communication (3), pour la restitution des contenus audio, **caractérisé par** les étapes consistant à sélectionner l'unité de restitution (5, 6, 7) au moyen de l'unité centrale informatisée (1) sur la base d'indications de localisation transmises avec les demandes de commandes, et
transmettre à l'unité de restitution (5, 6, 7) sélectionnée les données audio fournies par l'intermédiaire de l'unité centrale informatisée (1) d'une manière qui correspond respectivement à la demande de commande concernée par l'intermédiaire du second réseau de télécommunication (4) pour une restitution continue des contenus audio par l'unité de restitution (5, 6, 7) sélectionnée.

10. Procédé selon la revendication 9, **caractérisé en ce qu'**une indication de localisation destinée à déterminer l'unité de restitution (5, 6, 7) sélectionnée est transmise à l'unité centrale (1) avec les demandes de commandes respectives, laquelle indication de localisation comprend au moins l'une d'une indication de localisation indiquant la localisation de l'unité de restitution (5, 6, 7), et d'une indication de localisation indiquant l'endroit où est positionné le terminal de communication (3) demandeur.

11. Procédé selon la revendication 9, **caractérisé en ce que** l'unité de restitution (5, 6, 7) sélectionnée est déterminée sur la base d'au moins l'une de la position géographique actuelle du terminal de communication (3) lors de la transmission de la demande de commande concernée, et de la position géographique actuelle du terminal de communication (3) lors d'une restitution planifiée des contenus audio.

12. Procédé selon l'une quelconque des revendications 9 à 11, **caractérisé en ce que** l'unité centrale (1) introduit (S6) une demande de commande reçue concernant un contenu audio dans une file d'attente (131), détermine un instant planifié pour la restitution du contenu audio concerné, et transmet (S7) l'instant planifié au terminal de communication demandeur (3) afin d'en informer un utilisateur.

13. Procédé selon l'une quelconque des revendications 9 à 12, **caractérisé en ce que** l'unité centrale (1) transmet (S11) à l'unité de restitution (5, 6, 7) des contenus audio respectifs demandés sous la forme d'un flux de données continu.

14. Procédé selon l'une quelconque des revendications 9 à 13, **caractérisé en ce qu'**au moins certains des contenus audio sont combinés à des contenus vidéo et **en ce que** l'unité centrale (1) transmet les contenus audio/vidéo combinés aux unités de restitution (5, 6, 7) pour une restitution audio et vidéo.

15. Procédé selon l'une quelconque des revendications 9 à 14, **caractérisé en ce que** les demandes de commandes concernant des contenus audio sont transmises à l'unité centrale (1) par des terminaux de communication mobiles (3) par l'intermédiaire d'un réseau radio mobile.

16. Produit de programme informatique comprenant un moyen de code de programme informatique destiné à commander un ou plusieurs processeurs d'une unité centrale informatisée (1) de manière à ce que l'unité centrale (1)
reçoive des demandes de commandes concernant des contenus audio en provenance de terminaux de communication (3) par l'intermédiaire d'un premier réseau de télécommunication (2),
fournisse des données audio qui correspondent à un contenu audio spécifié dans une demande de commande concernée, et
transmette les données audio fournies par l'intermédiaire d'un second réseau de télécommunication (4) correspondant respectivement à une demande de commande à une unité de restitution (5, 6, 7) sélectionnée parmi une pluralité d'unités de restitution (5, 6, 7) géographiquement réparties, distantes de l'unité centrale (1) et séparées des terminaux de communication (3), pour la restitution des contenus audio, **caractérisé par** d'autres moyens à code de programme informatique qui commandent les processeurs de l'unité centrale (1) de manière à ce que l'unité centrale (1)
sélectionne l'unité de restitution (5, 6, 7) sur la base d'une indication de localisation respective reçue avec les demandes de commandes, et
transmette à l'unité de restitution (5, 6, 7) sélectionnée les données audio fournies correspondant respectivement à la demande de commande concernée par l'intermédiaire du second réseau de télécommunication (4) pour une restitution continue des contenus audio par l'unité de restitution (5, 6, 7) sélectionnée.

17. Produit de programme informatique selon la revendication 16, **caractérisé en ce qu'**il comprend d'autres moyens à code de programme qui commandent les processeurs de l'unité centrale (1) de manière à ce que l'unité centrale (1) reçoive une indication de localisation avec les demandes de commandes respectives pour déterminer l'unité de restitution (5, 6, 7) sélectionnée, laquelle indication de localisation comprend au moins l'une d'une indication de localisation indiquant la localisation de l'unité de restitution (5, 6, 7), et d'une indication de localisation indiquant l'endroit où est positionné le terminal de communication (3) demandeur.

18. Produit de programme informatique selon l'une quelconque des revendications 16 ou 17, **caractérisé en ce qu'**il comprend d'autres moyens à code de programme informatique qui commandent les processeurs de l'unité centrale (1) de manière à ce que l'unité centrale (1) introduise une demande de commande reçue concernant un contenu audio dans une file d'attente (131), détermine un instant planifié pour la restitution du contenu audio concerné et transmette l'instant planifié au terminal de communication (3) demandeur pour en informer un utilisateur.

19. Produit de programme informatique selon l'une quelconque des revendications 16 à 18, **caractérisé en ce qu'**il comprend d'autres moyens à code de programme informatique qui commandent les processeurs de l'unité centrale (1) de manière à ce que l'unité centrale (1) transmette à l'unité de restitution (5, 6, 7) les contenus audio respectivement demandés sous la forme d'un flux de données continu.
